# DEMANDE DE BREVET EUROPEEN

(11) **EP 3 320 777 A1**
(43) Date de publication de la demande: **16.05.2018**
(21) Numéro de dépôt: 16306473.6
(22) Date de dépôt: 10.11.2016
(51) Int. Cl.: A21B 3/02

(54) **FOUR COMPRENANT DES MOYENS D'ÉTANCHÉITÉ**

(71) Demandeur: Bongard SAS, 67810 Holtzheim (FR)
(72) Inventeur: BADER, Daniel, 67810 WOLFISHEIM (FR)
(74) Mandataire: Kessler, Marc

(57) **Abrégé**

La présente invention se rapporte à un four (1) comprenant des moyens (6) de production de chaleur, une ou plusieurs enceintes (2) comprenant des moyens (7) de réception d'un ou des produits à cuir, définissant un plan (P) sensiblement horizontal, une ouverture (5), une plateforme (17) s'étendant devant ladite ouverture (5) et comprenant une partie proximale proche de ladite ouverture (5), une partie médiane et une partie distale, des moyens (10) d'obturation de ladite ouverture (5) comprenant une première et une seconde surface (11 et 12), un bord inférieur (13), un bord supérieur (14) et des bords latéraux, les moyens (10) d'obturation étant aptes à passer d'une position dite « ouverte » à une position dite « fermée », et inversement, le bord inférieur (13) des moyens (10) d'obturation, lorsque ceux-ci sont dans la position « fermée », entrant en contact avec un joint (18) affleurant, ou une partie dudit joint (18) affleurant, la surface de la plateforme (17).

## Description

### Objet de l'invention

La présente invention se rapporte à un four, en particulier un four à sole, comprenant des moyens d'obturation de l'enceinte de cuisson coopérant avec des moyens d'étanchéité.

### Etat de la technique

Traditionnellement, les fours, qu'ils soient industriels ou ménagers, en particulier les fours de boulangerie, fonctionnent sous pression atmosphérique et comprennent une enceinte destinée à recevoir des produits, et dans laquelle ils subiront un traitement thermique, ainsi que des moyens de production de chaleur, qui peuvent être disposés à l'intérieur ou à l'extérieur de l'enceinte de cuisson.

Généralement, l'enceinte est faite d'un matériau réfractaire et les moyens de production de chaleur, qui peuvent être directs ou indirects, mettent en oeuvre soit la combustion d'un combustible, tel le gaz, le fioul ou le bois, soit une résistance électrique, ou bien le rayonnement solaire pour ce qui concerne les fours solaires.

La majorité des fours connus présente l'inconvénient d'avoir de fortes déperditions de chaleur. C'est pourquoi, il a été proposé d'obturer l'enceinte de cuisson à l'aide de moyens d'obturation mobiles, une porte ou une vitre, éventuellement amovibles, ce qui présente également l'avantage de maintenir dans le four les éventuelles fumées produites lors de la cuisson. Malgré cela, les déperditions de chaleur restent importantes et, pour ce qui concerne les fours mettant en oeuvre une cuisson en présence de vapeur, de fortes déperditions de vapeur sont également à déplorer.

Ainsi est connu un four à soles, comme décrit dans le document EP2630865, comprenant une multitude d'enceintes de cuisson, chaque enceinte étant obturée par une porte pivotante ayant une position de maintenance permettant son nettoyage. En position fermée, le bord inférieur de la porte vient en butée contre une plaque inférieure disposée au niveau de l'ouverture des enceintes de cuisson. Cette solution présente l'inconvénient d'être, non seulement peu performante en termes d'étanchéité, mais également d'être très bruyante lorsque la porte vient buter contre la plaque en métal lorsqu'elle obture l'enceinte de cuisson.

Par ailleurs, il a été proposé l'emploi de joints de butée. Par exemple, le document WO2011023608, décrit un four à sole comprenant une enceinte dont la circonférence intérieure comprend une garniture sur laquelle vient s'appuyer la surface d'une porte, montée pivotante, lorsqu'elle est en position fermée. Outre le fait que le nettoyage, de l'enceinte et de la butée de porte d'un tel four, n'est pas aisé, de par la présence de résidus de cuisson et par la répétition des séquences d'ouvertures et fermetures de la porte, un tel joint de butée s'use rapidement, ce qui réduit son efficacité en termes de réduction des déperditions de chaleur et/ou de vapeur.

L'inconvénient du nettoyage peu aisé de l'enceinte du four se présente également pour ce qui concerne le four décrit dans le document US4503837. Dans ce document, le four comprend une porte sectionnelle coulissante, faite de trois compartiments. Afin de limiter les déperditions de chaleur, chaque compartiment comprend un joint fixé sur les bords latéraux, ainsi qu'un joint en forme de « Z », fixé sous le bord inférieur, et dont une extrémité s'étend dans une gorge en forme de « V ». La présence de ces trois gorges à l'entrée de l'enceinte rend le nettoyage de l'enceinte compliqué car les particules, les imbrulés, se trouvant dans l'enceinte viennent se loger dans les gorges. Pour y remédier, US4503837 propose l'utilisation de patins, fixés sur le bord inférieur de chaque porte, et coulissant dans les gorges pour les nettoyer et supprimer les particules et la saleté s'y trouvant. Toutefois, outre le fait que le système décrit dans US4503837 est complexe et que la tenue du joint sur le bord de la porte soit peu fiable, le nettoyage de ces trois gorges par les patins n'est pas très efficace et nécessite par conséquent une intervention manuelle supplémentaire. Par ailleurs, le four présente un forte déperdition de chaleur du fait de la présence de patins sous le bord inférieur du compartiment, de part et d'autre du joint d'étanchéité, créant une discontinuité de jointure et donc d'étanchéité.

### Buts de l'invention

La présente invention vise à fournir un four comprenant des moyens d'étanchéité qui ne présentent pas les inconvénients de l'état de la technique.

La présente invention vise à fournir une alternative aux solutions de l'état de la technique existantes.

La présente invention vise à fournir un four présentant une déperdition réduite de chaleur, et éventuellement également de vapeur, qui soit de surcroit facile d'entretien et qui soit résistant à l'usure.

### Résumé de l'invention

La présente invention porte sur un four comprenant des moyens de production de chaleur, une ou plusieurs enceintes comprenant des moyens de réception d'un ou des produits à cuire, définissant un plan (P) sensiblement horizontal, une ouverture, une plateforme s'étendant devant l'ouverture et comprenant une partie proximale proche de l'ouverture, une partie médiane et une partie distale, des moyens d'obturation de l'ouverture comprenant une première et une seconde surface, un bord inférieur, un bord supérieur et des bords latéraux, les moyens d'obturation étant aptes à passer d'une position dite « ouverte » à une position dite « fermée », et inversement, le bord inférieur des moyens d'obturation, lorsque ceux-ci sont dans la position « fermée », entrant en contact avec un joint, ou une partie du joint, qui affleure la surface de la plateforme.

Selon des modes préférés de l'invention, le dispositif de l'invention comprend au moins une, ou une combinaison quelconque appropriée, des caractéristiques suivantes :
- le joint est disposé au niveau de la partie distale ou médiane de la plateforme,
- le joint est disposé à l'extrémité de la partie proximale de la plateforme, le joint, ou une partie du joint, affleurant la plateforme et les moyens de réception d'un ou des produits à cuire,
- le joint comprend une arête s'étendant sensiblement perpendiculairement au plan formé par la plateforme et le long du joint, ou partie du joint, et dont un flanc entre en contact avec la première surface ou la seconde surface des moyens d'obturation, quand ceux-ci sont dans la position « fermée »,
- le joint comprend en outre un bourrelet s'étendant sensiblement perpendiculairement au plan formé par la plateforme, et le long du joint, ou partie du joint, et dont une pente entre en contact avec une extrémité biaisée du bord inférieur des moyens d'obturation, quand ceux-ci sont dans la position « fermée »,
- le joint est disposé dans une gorge aux bords évasés,
- le joint, l'arête ou le bourrelet s'ils sont présents, comprennent ou sont faits de silicone,
- la plateforme s'étend sensiblement horizontalement dans le prolongement du plan (P) ou s'étend dans un plan oblique, formant avec le plant (P) un angle α compris entre 0,1 et 10 degrés, la partie proximale, la partie médiane et la partie distale se trouvant, les unes par rapport aux autres, dans un même plan, ou sensiblement dans un même plan,
- la partie proximale s'étend depuis l'ouverture, sensiblement dans le prolongement du plan (P) ou s'étendant selon un plan oblique par rapport au plan (P) selon un angle α compris entre 0,1 et 10 degrés, la partie médiane s'étendant dans un plan parallèle, ou sensiblement parallèle, au plan (P), ou s'étendant selon un plan oblique par rapport au plan (P) selon un angle β qui est compris entre 0,1 et 10 degrés, la partie distale s'étendant dans un plan parallèle, ou sensiblement parallèle, au plan (P), ou s'étendant selon un plan oblique par rapport au plan (P) selon un angle γ qui est compris entre 0,1 et 10 degrés,
- les bords latéraux des moyens d'obturation comprennent au moins un joint s'étendant sur tout ou partie de la longueur des bords latéraux,
- le four comprend un joint supplémentaire venant en contact avec le bord supérieur des moyens d'obturation, lorsque ceux-ci sont dans la position « fermée »,
- le joint supplémentaire comprend une section transversale carrée ou rectangle, et le contact avec les moyens d'obturation se fait par l'extrémité plane ou biaisée du bord supérieur,
- les moyens d'obturation sont aptes à pivoter selon un axe de pivotement et passent de la position « ouverte » à la position « fermée », et inversement, par un mouvement battant,
- les moyens de réception d'un ou des produits à cuire comprennent au moins une sole,
- le four est un four de boulangerie comprenant une multitude d'enceintes identiques, disposées les unes sur les autres et fermées par des moyens d'obturation distincts pour chaque enceinte.

### Brève description des figures

La figure 1 est une vue schématique de côté d'un premier mode de réalisation du four selon l'invention.
La figure 2 est une vue schématique du mode de réalisation de la figure 1 sans les moyens d'obturation.
La figure 3 représente une vue schématique de la partie inférieure du four selon le mode de réalisation des figures 1 et 2.
La figure 4 représente une vue schématique de détail d'un mode de réalisation particulier du contact entre le bord inférieur des moyens d'obturation et le joint selon l'invention pour le mode de réalisation de figures 1 et 2.
La figure 5 représente une vue schématique de détail d'un mode de réalisation particulier du contact entre le bord supérieur des moyens d'obturation et le joint supplémentaire selon l'invention pour le mode de réalisation de figures 1 et 2.
La figure 6 est une vue schématique de côté d'un second mode de réalisation du four selon l'invention sans représentation des moyens d'obturation.
La figure 7 est une vue schématique de côté d'un autre mode de réalisation de la plateforme du four selon l'invention.
La figure 8 est une vue schématique de côté d'un autre mode de réalisation de la plateforme du four selon l'invention.

### Description détaillée de l'invention

Le four 1 selon l'invention comprend au moins une enceinte 2, dans laquelle se fait la cuisson d'un produit sous l'action de la chaleur. De préférence le four 1 comprend une multitude d'enceintes 2, disposées les unes sur les autres et/ou les unes à coté des autres, qui de préférence sont identiques, sensiblement identiques ou bien différentes, les unes aux autres.

De préférence, l'enceinte ou les enceintes 2 sont intégrées dans un bâti. Avantageusement, elles sont intégrées dans une enceinte isolante, ou bien est recouverte d'un matériau, ou une combinaison de matériaux, isolants thermiquement.

L'enceinte ou les enceintes 2 ont toute forme et dimensions adéquates pour permettre la cuisson d'au moins un produit, de préférence d'une multitude de produits. L'enceinte ou les enceintes 2 sont faites de tous matériaux, ou assemblage(s) de matériaux, adéquats. Elle comprennent au moins une paroi supérieure 3, une paroi inférieure 4 et une ouverture 5.

L'ouverture 5 a une forme et des dimensions adéquates, apte à permettre l'accès à tout ou partie de l'enceinte 2.

Le four 1 comprend en outre des moyens 6 de production de chaleur aptes à porter l'enceinte 2 ou la multitude d'enceintes 2 à une température adéquate pour le traitement thermique d'au moins un produit. Ces moyens sont disposés de préférence à l'intérieur de l'enceinte 2, en partie inférieure et/ou en partie supérieure et/ou en partie avant et/ou au fond de l'enceinte 2. Néanmoins, ils peuvent également, ou de façon alternative, se trouver à l'extérieure de l'enceinte 2. Ils mettent en oeuvre soit la combustion d'un combustible, tel le gaz, le fioul ou le bois, soit une résistance électrique, ou bien le rayonnement solaire pour ce qui concerne les fours solaires. En outre, ils peuvent également mettre un oeuvre un fluide chauffant ou un flux d'air chaud.

De préférence, le four 1 comprend des moyens de contrôle et/ou des moyens de commande et/ou des moyens de programmation des moyens 6 de production de chaleur.

De préférence, l'enceinte 2 ou les enceintes 2 comprennent des moyens 7 de réception du ou des produits à traiter thermiquement, sur lesquels lesdits produits sont placés, et fournissant au moins une surface 8 de cuisson. Ces moyens 7, et donc la surface 8 de cuisson, définissent un plan (P), qui est parallèle, ou sensiblement parallèle à la paroi inférieure de l'enceinte 2.

Les moyens 7 de réception ont toutes formes et toutes dimensions compatibles avec celle de l'enceinte 2. De façon très simple, et pour le mode de réalisation dans lequel les moyens 6 de production de chaleur sont extérieurs à l'enceinte 2, les moyens 7 de réception peuvent comprendre, ou être, la paroi inférieure 4 de l'enceinte 2. Néanmoins, de préférence, il s'agira par exemple d'un ou plusieurs plateaux et/ou d'un ou plusieurs dispositifs réfractaires.

De préférence, les moyens 7 de réception sont fixes durant l'enfournement, le défournement des produits à cuire, leur nettoyage ou celui de l'enceinte 2, mais sont mobiles durant la cuisson. De préférence, les moyens 7 de réception comprennent au moins une sole 9, qui présente l'avantage d'offrir une bonne stabilité et une homogénéité de la température diffusée par les moyens de production de chaleur dans l'enceinte 2.

Dans un mode de réalisation particulier de l'invention, les moyens 6 de production de chaleur sont disposés au dessus de la paroi inférieure 4 de l'enceinte 2 du four, sous une sole 9 et/ou sous la paroi supérieure 5 de l'enceinte 2 sous une seconde sole 9.

Le four 1 peut également comprendre des moyens de génération de vapeur d'un liquide, de préférence de vapeur d'eau, dans l'enceinte 2 et/ou des moyens de distribution de la vapeur dans l'enceinte 2.

De préférence, le four 1 comprend des moyens de brassage de l'atmosphère intérieure de l'enceinte 2, par exemple une turbine ou un ventilateur, et, éventuellement, des moyens d'évacuation de la chaleur et/ou de la vapeur présente dans l'enceinte 2, mis en oeuvre par des moyens manuels ou automatiques.

Le four 1 comprend en outre des moyens 10 d'obturation de l'ouverture 5, ayant une forme et des dimensions adéquats, de préférence qui sont fonction de la forme et des dimensions de l'ouverture 5. Ces moyens 10 d'obturation sont aptes à passer, de façon pivotante ou glissante, d'une position dite « ouverte », dans laquelle l'ouverture 5 n'est pas obturée, à une position dite « fermée » dans laquelle les moyens d'obturation closent l'ouverture 5, et inversement. Par ailleurs, ces moyens peuvent adopter toutes les positions intermédiaires possibles entre la position « ouverte » et la position « fermée ». Dans le mode de réalisation du four 1 comprenant une multitude d'enceintes 2, chaque enceinte comprend ces propres moyens 10 d'obturation, qui peuvent être actionnés indépendamment les uns des autres et/ou de façon concomitante.

Dans un mode de réalisation particulier de l'invention, les moyens 10 d'obturation sont faits d'une seule pièce obturant l'ouverture 5. Néanmoins, ils peuvent également comprendre au moins deux parties, de préférence une multitude de parties, pouvant être mises en oeuvre indépendamment les unes des autres, pour une obturation partielle de l'ouverture 5. De préférence, la multitude de parties comprend un joint disposé sur au moins un, de préférence au moins deux, de leurs bords, permettant d'obtenir une étanchéité améliorée entre deux parties adjacentes de ces moyens 10 d'obturation. De préférence, le joint d'un bord d'une première partie des moyens 10 vient en superposition du joint d'un bord d'une seconde partie, adjacente à la première. Avantageusement, le joint est fait de silicone.

Pour des moyens 10 d'obturation pivotants, qu'ils soient faits d'une ou plusieurs parties, l'axe de pivotement 15 peut être disposé en partie haute ou en partie basse de l'ouverture 5 ou d'un châssis disposé et s'étendant devant l'ouverture 5 de l'enceinte 2 ou de chaque enceinte 2. La présence d'un tel châssis présente l'avantage de gagner en hauteur d'enfournement des produits à cuire.

Les mouvements d'ouverture et de fermeture des moyens 10 d'obturation pivotants peuvent se faire selon un sens de rotation de l'extérieur vers l'intérieur du four 1 et/ou selon un sens de rotation contraire, de l'intérieur vers l'extérieur du four 1. Néanmoins, pour des moyens 10 d'obturation dont l'axe de pivotement 15 est disposé en partie basse, les mouvements d'ouverture et de fermeture se font de préférence de l'extérieur du four 1 vers l'intérieur du four 1, ce qui présente l'avantage de maximiser l'utilisation de la surface de cuisson 8, sans que les moyens 10 d'obturation viennent buter contre les produits à cuire ou contre les moyens 6 de production de chaleur.

Dans ces modes de réalisation, les moyens 10 d'obturation peuvent être sensiblement parallèles au plan formé par la surface de cuisson 8 en position « ouverte », et sensiblement perpendiculaire ou bien oblique par rapport au plan formé par la surface de cuisson 8 en position « fermée ». Les mouvements de passage de la position « ouverture » à celle « fermée » sont des mouvements battant d'avant en arrière et/ou inversement, selon un angle qui peut être compris entre 0° à 180°, ou selon un angle compris entre 0° et 90° ou entre 90° et 180°, par rapport au plan formé par la paroi inférieure de l'enceinte 2.

Pour des moyens 10 d'obturation glissants, ces moyens 10 peuvent obturer l'ouverture 5 par un mouvement de bas en haut, de haut en bas ou d'un coté à l'autre de l'ouverture 5 ou du châssis.

Quels que soient leurs modes de réalisation, les moyens 10 d'obturation comprennent au moins une première surface 11, qui, lorsqu'ils sont en position « fermée », fait face à l'intérieur de l'enceinte 2 et une seconde surface 12 faisant face à l'extérieur de l'enceinte 2. Les moyens 10 d'obturation comprennent au moins un bord inférieur 13, un bord supérieur 14 et des bords latéraux. Dans le mode de réalisation dans lequel les moyens 10 d'obturation de l'ouverture 5 ont une forme sensiblement parallélépipédique, le bord inférieur 13, le bord supérieur 14 et les bords latéraux sont définis par rapport à la position des moyens 10 d'obturation lors de leur utilisation au sein du four 1 selon l'invention. Dans le mode de réalisation dans lequel les moyens 10 d'obturation ont une forme sensiblement circulaire, ovoïde ou oblongue, le bord inférieur 13, le bord supérieur 14 et les bords latéraux sont constitués chacun par au moins une partie du bord périphérique desdits moyens 10 et sont également définis par rapport à la position desdits moyens 10 lors de leur utilisation au sein du four 1 selon l'invention.

De préférence, et quels que soient les modes de réalisation des moyens 10 d'obturation, le bord inférieur 13 et éventuellement le bord supérieur 14 comprend ou comprennent une, de préférence, deux extrémités obliques, ou biaisées, formant un ou des points de contact ou d'appui.

De préférence, et quels que soient les modes de réalisation des moyens 10 d'obturation, les bords latéraux de ces moyens 10 comprennent au moins un joint s'étendant sur tout ou partie de la longueur de ces bords latéraux et entrant en contact avec les parois latérales de l'enceinte 2 ou le châssis, afin d'améliorer l'étanchéité de l'enceinte 2.

De préférence, les moyens 10 d'obturation comprennent, ou sont constitués, d'un ou plusieurs panneaux en métal, en composite, en céramique, d'une ou plusieurs vitres ou portes, éventuellement vitrées.

De préférence, les moyens 10 d'obturation, en particulier la ou les vitres ou portes, interagissent avec des moyens 16 de commande pour leur mise en oeuvre manuelle ou motorisée de chaque moyens 10 d'obturation indépendamment les uns des autres et/ou de façon concomitante. A titre d'exemple, les moyens 16 de commande peuvent comprendre une ou plusieurs poignées, disposées à tout endroit adéquat de la ou des portes ou vitres, ou peuvent comprendre un ou plusieurs moteurs permettant l'ouverture ou la fermeture des vitres ou portes. Ces moyens 16 de commande peuvent également permettre un fonctionnement automatique des moyens 10 d'obturation. Par exemple, ils peuvent comprendre, ou mettre en oeuvre, un détecteur, un senseur, détectant l'approche ou la présentation d'un produit à cuire, ou d'un dispositif d'enfournement, une spatule ou un enfourneur par exemple, devant ou à proximité des moyens 10 d'obturation.

De préférence, les moyens 10 d'obturation sont amovibles, ou bien ils peuvent prendre une ou plusieurs positions de maintenance pour faciliter leur entretien et leur nettoyage.

De préférence, les moyens 10 d'obturation coopèrent avec des moyens faisant office de ressort afin de ralentir les mouvements, de battement ou de translation, des moyens d'obturation.

De préférence, les moyens 10 d'obturation coopèrent avec des moyens de verrouillage des moyens d'obturation. A titre d'exemple, il peut s'agir d'un pêne ou tous moyens adéquats disposés en tous points adéquats des moyens d'obturation.

Le four 1 comprend en outre une plateforme 17, ou plaque d'accueil, s'étendant devant l'ouverture 5 de l'enceinte 2 ou des enceintes 2, ce qui présente l'avantage de permettre de poser le produit à cuire, ou le produit en sortie de cuisson, ou d'être un appui pour des moyens d'enfournement, une spatule ou un enfourneur par exemple, et de permettre au produit à cuire ou cuit de glisser dans et hors de l'enceinte 2 ou des enceintes 2.

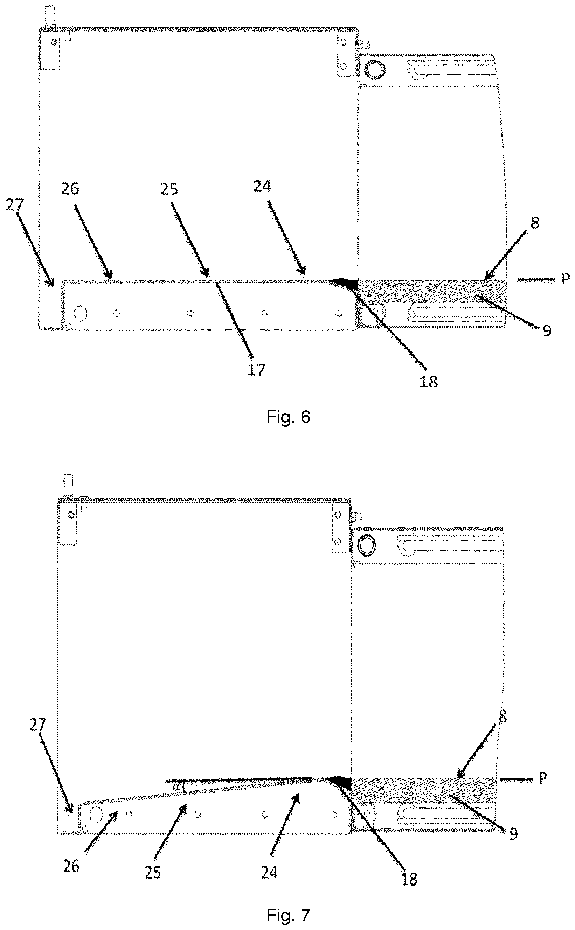

La plateforme 17 peut s'étendre sensiblement horizontalement, de préférence sous le châssis du four 1, dans le prolongement du plan (P) formé par la surface 8 de cuisson des moyens 7 de réception du ou des produits à cuir, la partie proximale 24 de la plateforme 17, proche de l'ouverture 5 de l'enceinte 2, sa partie médiane 25 et sa partie distale 26 étant dans le même plan ou sensiblement dans le même plan (figure 6).

De préférence, l'extrémité 27 de la partie distale 26 de la plateforme comprend une paroi s'étendant vers le bas sensiblement perpendiculaire au plan de la plateforme 17. Avantageusement, l'extrémité 27 a une section longitudinale en forme de « L » (figures 6 à 8).

Dans un autre mode de réalisation représenté à la figure 7, la plateforme 17 peut s'étendre selon un plan oblique par rapport au plan (P), selon une pente descendante à mesure que la plateforme 17 s'éloigne de l'ouverture 5. Ainsi, la partie proximale de la plateforme 17, proche de l'ouverture 5, se trouve au niveau, ou sensiblement au niveau, des moyens 7 de réception, au niveau du plan (P), et l'extrémité de la partie distale de la plateforme se trouve sous le plan (P). De préférence, ce plan oblique forme, avec le plan (P), un angle α, de préférence, compris entre 0,1 et 10 degrés, avantageusement entre 1 et 5 degré.

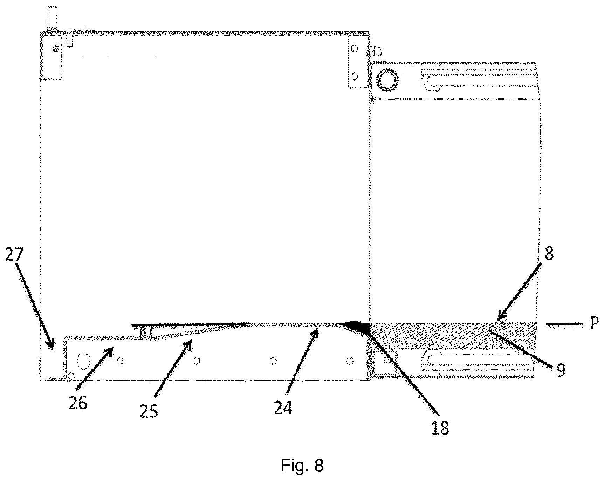

Dans un autre mode de réalisation, la plateforme 17 peut comprendre une partie proximale s'étendant dans un plan parallèle, ou sensiblement parallèle, au plan (P), ou dans un plan oblique au plan (P), de préférence selon l'angle α, de préférence, compris entre 0,1 et 10 degrés avantageusement entre 1 et 5 degrés, la partie médiane s'étendant dans le prolongement du plan (P) ou s'étendant selon une pente descendante, de façon oblique, dans un plan formant un angle β avec le plan (P), l'angle β étant compris entre 0,1 et 10 degrés, avantageusement entre 1 et 5 degrés, avec une partie distale s'étendant dans un plan parallèle, ou sensiblement parallèle, au plan (P), de préférence s'étendant dans le même plan que la partie médiane ou proximale, ou s'étendant en pente descendante, selon un plan oblique par rapport au plan (P) selon un angle γ qui est compris entre 0,1 et 10 degrés, avantageusement entre 1 et 5 degrés (figure 8).

Les angles α, β, γ peuvent être identiques ou différents entre eux.

La ou les pentes relativement douce des parties proximale, médiane et/ou distale de la plateforme 17, à savoir des angles α, β, et/ou γ ayant un angle maximal de 5 ou 10 degrés avec le plan (P) des moyens 7 de réception, présente(nt) l'avantage de faciliter l'élimination des saletés présentes dans l'enceintes 2 et/ou sur la plateforme 17.

Quels que soient les modes de réalisation de la plateforme 17, tout ou partie de cette dernière est lisse ou ondulée. De plus, la plateforme 17 fournit une surface continue devant l'ouverture 5 de l'enceinte 2 ce qui présente l'avantage d'améliorer son entretien et son nettoyage et donc également le nettoyage de l'enceinte 2 du four 1. Cette continuité de surface est également présente pour une plateforme 17 dont la partie proximale, la partie distale, et éventuellement la partie médiane, forment des plans différents. Pour cela, les différentes parties de la plateforme 17 peuvent être obtenues, de préférence, par le pliage d'une plaque d'un seul tenant, sans la formation d'arêtes vives, mais dans laquelle la ou les jonctions entre les différentes parties (proximale, médiane, distale) sont arrondies.

Le four 1 comprend en outre un joint 18 coopérant avec les moyens 10 d'obturation. Dans le four 1, il y a autant de joints 18 que de moyen 10 d'obturation et donc que d'enceintes 2. Le ou les joints 18 présentent l'avantage de diminuer, de préférence supprimer, les déperditions de chaleur, éventuellement également de vapeur, de ou des enceintes 2, et de maintenir dans le four 1 les éventuelles fumées produites lors de la cuisson, pour un scellement hermétique de ou des enceintes 2. Ce joint 18 présente également l'avantage de réduire, voir d'éliminer, les bruits de claquement des moyens 10 d'obturation lorsqu'ils passent de la position « ouverte » à la position « fermée ».

Le joint 18 est disposé affleurant, ou comprend une partie qui affleure, la surface de la plateforme 17, le joint 18 étant disposé a tout endroit adéquat de la plateforme 17 permettant une coopération avec les moyens 10 d'obturation, qu'ils soient faits d'un seul tenant ou de plusieurs parties. Ainsi, le joint peut s'étendre sur tout ou partie de la largeur de la plateforme 17 et peut être disposé au niveau de sa partie distale, ou sa partie médiane ou sa partie proximale, ou au niveau des jonctions entre la partie distale, médiane ou proximale.

De préférence, le joint 18, ou une partie du joint 18, comprend une surface se trouvant dans le plan formé par la plateforme 17 ou par la partie de la plateforme 17 dans laquelle il se trouve.

Dans un mode de réalisation préféré, le joint 18 est disposé dans la partie proximale de la plateforme, adjacent et le long du bord des moyens 7 de réception des produits à cuire. Toutefois, le joint 18 peut également être disposé dans la partie médiane ou distale, ce qui présente l'avantage de ne pas exposer le joint 18 aux températures pouvant régner dans l'enceinte 2 lors de l'utilisation du four 1.

De préférence, le joint 18 est disposé dans tout ou partie d'une gorge 20 ou de l'espace formé entre ces moyens 7 et la plateforme 17.

Au surplus du gain d'étanchéité, le joint 18 selon l'invention présente l'avantage de permettre un nettoyage facilité de l'intérieur de l'enceinte 2, en particulier des moyens 7 de réception des produits à cuire, de la surface 8 de cuisson, la paroi inférieure 4 ou la sole 9, et de la plateforme 17, ce qui réduit, voire supprime, les risques d'usure prématurée du joint 18 par les particules et résidus de cuisson, le joint 18 gardant ainsi son efficacité plus longtemps.

Le joint 18 peut comprendre en outre une arête ou un bourrelet 19, s'étendant, de préférence à une hauteur de moins de 10 mm, sensiblement perpendiculairement à, et le long de, la surface ou partie du joint 18, affleurant à la plateforme 17. L'arête ou le bourrelet 19, au moins le sommet du bourrelet 19, présente l'avantage de faire office de butée sur laquelle viennent en contact les moyens 10 d'obturation.

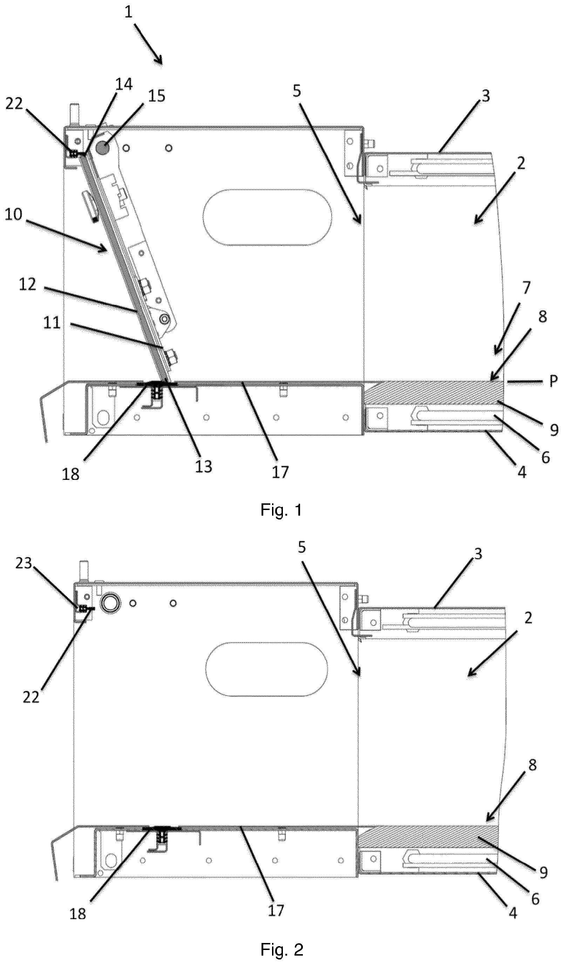

Dans les modes de réalisation dans lesquels le joint 18 comprend une arête ou un bourrelet 19, la partie affleurante du joint 18 peut être tout ou partie de l'arête ou du bourrelet 19, en particulier le sommet du bourrelet 19, comme représenté par exemple aux figures 1 à 3, ou la partie affleurante du joint 18 peut être la base du joint 18, à partir de laquelle l'arête ou le bourrelet 19 s'étend, comme représenté par exemple aux figures 6 à 8.

Les moyens 10 d'obturation lorsqu'ils sont en position fermée, engagent le joint 18, ou au moins une partie du joint 18, par leur bord inférieur 13. Le joint 18 selon l'invention n'engage pas un autre joint ou partie de joint qui serait disposé sur les moyens 10 d'obturation, en particulier sur la première surface 11 ou la seconde surface 12.

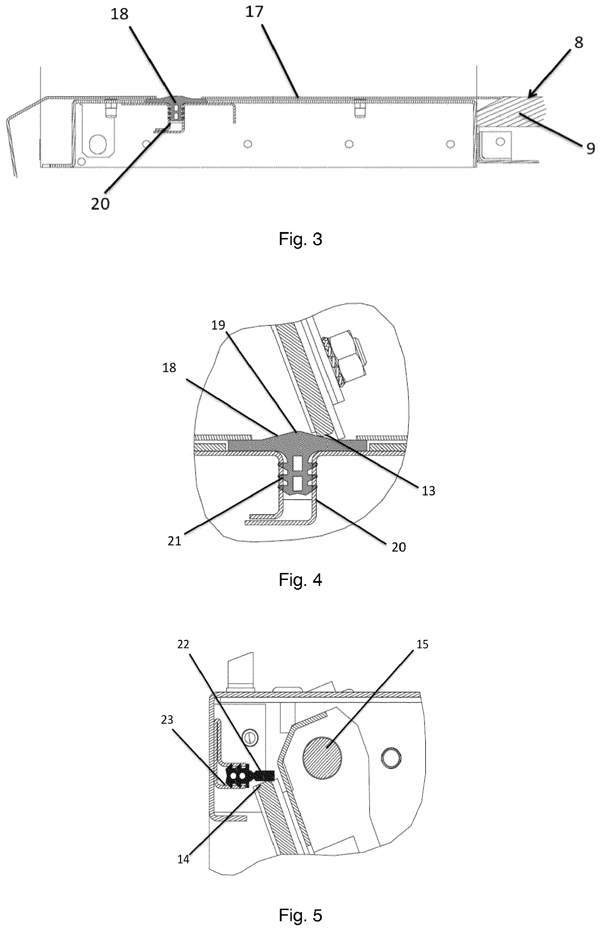

Dans le mode de réalisation dans lequel le bord inférieur 13 est de section carrée ou rectangulaire, les moyens 10 d'obturation entrent en contact avec la surface du joint 18, ou partie du joint 18, affleurant, par son extrémité plan. Pour un joint 18 comprenant en outre une arête ou un bourrelet 19, les moyens 10 d'obturation entrent en contact avec le flanc de l'arête ou la pente du bourrelet 19 avec au moins une partie de la première surface 11 ou de la seconde surface 12, ce qui présente l'avantage d'améliorer encore l'herméticité de l'enceinte 2. Pour un joint 18 comprenant un bourrelet 19, les moyens 10 d'obturation entrent en contact, de préférence, avec le joint 18, en particulier avec une pente du bourrelet 19, par l'extrémité du bord inférieur 13 qui comprend avantageusement au moins un bord biaisé, oblique (figure 4).

De préférence, le joint 18 comprend un, ou est fait d'un matériau ou ensemble de matériaux, facilement nettoyable et résistant aux températures d'utilisation du four 1. Le joint 18, ou la partie du joint 18, entrant en contact avec le bord inférieur 13 des moyens 10 d'obturation, éventuellement également l'arête et/ou le bourrelet 19, sont suffisamment compressibles et résiliants afin de permettre un contact étroit pour réaliser l'étanchéité. De préférence, le joint 18 est fait de silicone.

Dans le mode de réalisation dans lequel, les moyens 10 d'obturation passent de la position ouverte à la position fermée par un mouvement glissant, le bord inférieur 13 engage le joint 18 à l'une de ces extrémités, de préférence par une partie biaisée du bord inférieur 13, et glisse sur la surface du joint 18, ou partie du joint 18, affleurant, éventuellement le long de l'arête ou de la pente du bourrelet 19.

Dans le mode de réalisation dans lequel, les moyens 10 d'obturation passent de la position ouverte à la position fermée par un mouvement battant, de pivot, le bord inférieur 13 engage le joint 18, de préférence par l'une ou l'autre de son extrémité biaisée, en exerçant une force sur le joint, qui se comprime et, grâce à sa résilience, exerce à son tour une force contre le bord inférieur 13 des moyens 10 d'obturation. Dans les modes de réalisation dans lesquels le joint 18 comprend une l'arête ou le bourrelet 19, ces derniers sont, de préférence, suffisamment compressibles et présentent une résilience compatible afin de permettre le battement des moyens 10 d'obturation dans un mouvement compris entre environ 0° et 180°.

De préférence, et afin que le mouvement battant se fasse sans obstruction, la surface de la plateforme 17 autour du joint 18 présente une partie oblique, en l'occurrence, l'espace ou la gorge 20 recevant le joint 18 comprend des extrémités évasées. Cela permet à la partie du joint 18 affleurant et/ou à l'arête ou au bourrelet 19 d'être moins compressibles et résiliants, augmentant ainsi le caractère hermétique du contact entre le bord inférieur 13 et le joint 18.

De préférence, le joint 18 a une section transversale en forme de « T », ou bien sensiblement circulaire, oblongue ou ovoïde, parallélépipédique, carrée ou rectangle.

Le joint 18 est maintenu en place sur ou dans la plateforme 17 par des moyens de fixation, de préférence pour une fixation réversible. De préférence, ces moyens permettent un engagement de force du joint 18 dans tout ou partie, en particulier la gorge 20, de la plateforme 17. Avantageusement, le joint 18, ou une partie du joint 18, comprend des ailettes 21 ou un pas de vis fileté. De façon alternative, ces moyens peuvent comprendre une colle.

De préférence, le four 1 comprend en outre un joint 22 supplémentaire venant en contact avec le bord supérieur 14 des moyens 10 d'obturation, lorsque ces moyens 10 d'obturation sont en position « fermée ».

Le joint 22 présente l'avantage d'améliorer l'herméticité de l'enceinte 2, en particulier en complément du joint 18, tout en réduisant, ou éliminant, les bruits de claquement des moyens 10 d'obturation lorsqu'ils passent de la position « ouverte » à la position « fermée ».

De préférence, le joint 22, ou la partie du joint 22 entrant en contact avec les moyens 10 d'obturation, a une section transversale sensiblement circulaire, oblongue ou ovoïde. Avantageusement la section transversale est parallélépipédique, carrée ou rectangle, et le contact avec l'extrémité plan ou biaisé du bord supérieur 14.

De préférence, le joint 22 comprend un, ou est fait d'un, matériau ou ensemble de matériaux, résistant à la chaleur. Le joint 22, ou la partie du joint 22 entrant en contact avec le bord supérieur 14 des moyens 10 d'obturation, est suffisamment compressible et résiliant afin de permettre un contact étroit pour réaliser l'étanchéité.

De préférence, le joint 22 est fait du ou des mêmes matériaux que celui ou ceux du joint 18. Avantageusement, le joint 22 est fait de silicone.

De préférence, le joint 22 est disposé dans tout ou partie d'une gorge 23 pratiquée dans le châssis du four 1.

Le joint 22 est maintenu en place par des moyens de fixation, de préférence pour une fixation réversible. De préférence, ces moyens permettent un engagement de force du joint 22 dans tout ou partie d'une gorge 23. Avantageusement, le joint 22, ou une partie du joint 22, comprend des ailettes ou un pas de vis fileté. De façon alternative, ces moyens peuvent comprendre une colle.

De préférence, le four 1 comprend en outre des moyens d'enfournement, de préférence mobiles en translation, aptes à amener le ou les produits à cuire dans l'enceinte 2. Il peut s'agir par exemple d'un enfourneur. Le four 1 peut également comprendre en outre un élévateur, mobile verticalement, en translation, et des moyens de déplacement pour déplacer verticalement les moyens d'enfournement devant l'enceinte 2 ou les enceintes 2.

De préférence, le four 1 comprend une hotte, faisant saillie depuis la section supérieure de la façade avant du four 1. De préférence, la hotte comprend un extracteur relié à une conduite afin d'évacuer la buée, la vapeur d'eau, ou les fumées émanant de l'enceinte 2 ou des enceintes 2.

De préférence, le four 1 selon l'invention est un four de boulangerie, mais il peut également s'agir d'un four ménager, encastrable ou faisant partie intégrante d'une cuisinière.

De préférence, les produits traités thermiquement par le four 1 selon l'invention sont des produits de boulangerie, comme par exemple du pain, des viennoiseries ou analogues.

## Revendications

1. Un four (1) comprenant des moyens (6) de production de chaleur, une ou plusieurs enceintes (2) comprenant des moyens (7) de réception d'un ou des produits à cuire, définissant un plan (P) sensiblement horizontal, une ouverture (5), une plateforme (17) s'étendant devant ladite ouverture (5) et comprenant une partie proximale proche de ladite ouverture (5), une partie médiane et une partie distale, des moyens (10) d'obturation de ladite ouverture (5) comprenant une première et une seconde surface (11 et 12), un bord inférieur (13), un bord supérieur (14) et des bords latéraux, lesdits moyens (10) d'obturation étant aptes à passer d'une position dite « ouverte » à une position dite « fermée », et inversement, ledit bord inférieur (13) desdits moyens (10) d'obturation, lorsque ceux-ci sont dans la position « fermée », entrant en contact avec un joint (18), ou une partie dudit joint (18), qui affleure la surface de la plateforme (17).

2. Le four (1) selon la revendication 1, dans lequel le joint (18) est disposé à au niveau de la partie distale ou médiane de la plateforme (17),

3. Le four (1) selon la revendication 1, dans lequel le joint (18) est disposé à l'extrémité de la partie proximale de la plateforme (17), ledit joint (18), ou une partie dudit joint (18), affleurant ladite plateforme (17) et les moyens (7) de réception d'un ou des produits à cuir.

4. Le four (1) selon l'une quelconque des revendications précédentes, dans lequel le joint (18) comprend en outre une arête s'étendant sensiblement perpendiculairement au plan formé par la plateforme (17) et le long du joint (18), ou partie du joint (18), et dont un flanc entre en contact avec la première surface (11) ou la seconde surface (12) des moyens (10) d'obturation, quand lesdits moyens (10) d'obturation sont dans la position « fermée ».

5. Le four (1) selon l'une quelconque des revendications 1 à 4, dans lequel le joint (18) comprend en outre un bourrelet (19) s'étendant sensiblement perpendiculairement au plan formé par la plateforme, et le long du joint (18), ou partie du joint (18), et dont une pente entre en contact avec une extrémité biaisée du bord inférieur (13) des moyens (10) d'obturation, quand lesdits moyens (10) d'obturation sont dans la position « fermée ».

6. Le four (1) selon l'une quelconque des revendications précédentes, dans lequel le joint (18) est disposé dans une gorge (20) aux bords évasés.

7. Le four (1) selon l'une quelconque des revendications précédentes, dans lequel le joint (18), l'arête ou le bourrelet (19) s'ils sont présents, comprennent ou sont faits de silicone.

8. Le four (1) selon l'une quelconque des revendications précédentes, dans lequel la plateforme (17) s'étend sensiblement horizontalement dans le prolongement du plan (P) ou s'étend dans un plan oblique, formant avec ledit plan (P) un angle α compris entre 0,1 et 10 degré, la partie proximale, la partie médiane et la partie distale se trouvant, les unes par rapport à autres, dans un même plan, ou sensiblement dans un même plan.

9. Le four (1) selon l'une quelconque des revendications 1 à 7, dans lequel la partie proximale s'étend depuis l'ouverture (5), sensiblement dans le prolongement du plan (P) ou s'étendant selon un plan oblique par rapport au plan (P) selon un angle α compris entre 0,1 et 10 degré, la partie médiane s'étendant dans un plan parallèle, ou sensiblement parallèle, au plan (P), ou s'étendant selon un plan oblique par rapport au plan (P) selon un angle β qui est compris entre 0,1 et 10 degrés, la partie distale s'étendant dans un plan parallèle, ou sensiblement parallèle, au plan (P), ou s'étendant selon un plan oblique par rapport au plan (P) selon un angle γ qui est compris entre 0,1 et 10 degrés.

10. Le four (1) selon l'une quelconque des revendications précédentes, dans lequel les bords latéraux des moyens (10) d'obturation comprennent au moins un joint s'étendant sur tout ou partie de la longueur desdits bords latéraux.

11. Le four (1) selon l'une quelconque des revendications précédentes, comprenant en outre un joint (22) venant en contact avec le bord supérieur (14) des moyens (10) d'obturation, lorsque lesdits moyens (10) d'obturation sont dans la position « fermée ».

12. Le four (1) selon la revendication 11, dans lequel le joint (22) comprend une section transversale carrée ou rectangle, et dans lequel le contact avec les moyens (10) d'obturation se fait par l'extrémité plane ou biaisée du bord supérieur (14).

13. Le four (1) selon l'une quelconque des revendications précédentes, dans lequel les moyens (10) d'obturation sont aptes à pivoter selon axe de pivotement (15) et passent de la position « ouverte » à la position « fermée », et inversement, par un mouvement battant.

14. Le four (1) selon l'une quelconque des revendications précédentes, dans lequel les moyens (7) de réception d'un ou des produits à cuir comprennent au moins une sole.

15. Le four (1) selon l'une quelconque des revendications précédentes, étant un four de boulangerie comprenant une multitude d'enceintes (2) identiques, disposées les unes sur les autres et fermées par des moyens (10) d'obturation distincts pour chaque enceinte (2).
